**Europäisches Patentamt**

**European Patent Office**

**Office européen des brevets**

(19)

(11) Veröffentlichungsnummer: **0 499 890 A2**

# EUROPÄISCHE PATENTANMELDUNG

(12)

(21) Anmeldenummer: **92101953.5**

(22) Anmeldetag: **06.02.92**

(51) Int. Cl.5: **G06F 13/40**, G06F 12/02, G06F 12/04

(30) Priorität: **20.02.91 DE 4105193**

(43) Veröffentlichungstag der Anmeldung:
**26.08.92 Patentblatt 92/35**

(84) Benannte Vertragsstaaten:
**DE FR GB IT NL SE**

(71) Anmelder: **Bodenseewerk Gerätetechnik GmbH**
**Alte Nussdorfer Strasse 15 Postfach 1120**
**W-7770 Überlingen/Bodensee(DE)**

(72) Erfinder: **Uihlein, Christoph**
**Strandweg 39**
**W-7770 Überlingen(DE)**
Erfinder: **Häusing, Michael**
**Strandweg 29a**
**W-7770 Überlingen(DE)**
Erfinder: **Pühler, Andreas Johann**
**Am Blütenhang 9**
**W-7762 Ludwigshafen(DE)**

(74) Vertreter: **Wolgast, Rudolf, Dipl.-Chem. Dr. et al**
**Dipl.-Phys. Jürgen Weisse Dipl.Chem. Dr. Rudolf Wolgast Bökenbusch 41 Postfach 11 03 86**
**W-5620 Velbert 11 Langenberg(DE)**

(54) **Datenschnittstelle zur Ein- und Ausgabe von Daten bei Parallelrechnern.**

(57) Es soll eine Datenschnittstelle zur Wandlung zwischen bitparallel und wortseriell vorliegenden Datenmustern und bitseriell und wortparallel vorliegenden Datenmustern in Verbindung mit einem Parallelrechner geschaffen werden, um die Eingabe und Ausgabe der Daten zu beschleunigen. Zu diesem Zweck ist dem Parallelrechner ein dreidimensional organisierter Datenspeicher (66) mit einer dreidimensionalen Adressierung vor- und/oder nachgeschaltet, bei welcher jede Adresse von drei Komponenten gebildet ist, von denen eine erste Komponente (x) die Wertigkeit eines Bits in einem Wort, die zweite Komponente (y) die laufende Zahl des Wortes in einer Folge von Worten und die dritte Komponente (z) die laufende Zahl der Folge angibt, zu der das Wort gehört. Dem Datenspeicher ist ein Schaltnetzwerk zur Steuerung des Datenspeichers zugeordnet. In dem Datenspeicher ist ein ankommender bitparallel und wortseriell formatierter Datenstrom zwischenspeicherbar, wobei die Daten von dem Datenspeicher (66) als bitserielles und wortparalleles Datenmuster in Form von "Bitebenen" (26) mit gleichen Bitadressen auf einen Parallelrechner (76) aufschaltbar sind, und/oder ein vom Parallelrechner (76) gelieferter, bitseriell und wortparallel als Folge von "Bitebenen" organisierter Datenstrom zwischenspeicher, wobei die Daten als bitparalleles und wortserielles Datenmuster ausgebbar sind.

Fig. 4

Die Erfindung betrifft ein Datenschnittstelle zur Wandlung zwischen bitparallel und wortseriell vorliegenden Datenmustern und bitseriell und wortparallel in Verbindung mit einem Parallelrechner vorliegenden Datenmustern.

Speziell betrifft die Erfindung eine Datenschnittstelle für flächig vernetzte Parallelrechner. Solche flächig vernetzte Parallelrechner werden zur Bearbeitung von zweidimensionalen Datenstrukturen eingesetzt. Dadurch, daß in der Regel jedem Wort ein Prozessorelement zugeordnet ist und die Operationen gleichzeitig und parallel in allen Prozessorelementen auf der Datenstruktur durchgeführt werden, gestatten solche flächig vernetzte Parallelrechner eine sehr hohe Rechenleistung. Diese hohe Rechenleistung läßt sich aber nur dann effektiv nutzen, wenn die Eingabe und Ausgabe der Daten entsprechend schnell erfolgt.

Dabei muß eine Umformatierung der Daten vorgenommen werden. Dem Rechner wird ein bitparalleler, wortserieller Datenstrom zugeführt. Die Daten, z.B. digitalisierte Meßwerte, laufen nacheinander ein (wortseriell). Die Bits der einzelnen Daten liegen jedoch jeweils gleichzeitig vor (bitparallel). Der Rechner verarbeitet aber alle Daten gleichzeitig (wortparallel), aber in jedem Rechentakt von jedem Wort nur ein Bit (bitseriell).

Der Erfindung liegt die Aufgabe zugrunde, eine Datenschnittstelle für Parallelrechner zu schaffen, welche mit geringstmöglichem technischen Aufwand eine schnelle Datenversorgung und/oder eine schnelle Datenentsorgung des Parallelrechners gestattet.

Erfindungsgemäß wird diese Aufgabe dadurch gelöst, daß

(a) dem Parallelrechner ein dreidimensional organisierter Datenspeicher mit einer dreidimensionalen Adressierung vor- und/oder nachgeschaltet ist, bei welcher jede Adresse von drei Komponenten gebildet ist, von denen eine erste Komponente die Wertigkeit eines Bits in einem Wort, die zweite Komponente die laufende Zahl des Wortes in einer Folge von Worten und die dritte Komponente die laufende Zahl der Folge angibt, zu der das Wort gehört,

(b) dem Datenspeicher ein Schaltnetzwerk zur Steuerung des Datenspeichers zugeordnet ist,

(c) in dem Datenspeicher

- ein ankommender bitparallel und wortseriell formatierter Datenstrom zwischenspeicherbar ist, wobei die Daten von dem Datenspeicher als bitserielles und wortparalleles Datenmuster in Form von "Bitebenen" mit gleichen Bitadressen auf den Parallelrechner aufschaltbar sind, und/oder in dem Datenspeicher ein vom Parallelrechner gelieferter, bitseriell und wortparallel als Folge von "Bitebenen" organisierter Datenstrom zwischenspeicherbar ist, wobei die Daten als bitparalleles und wortserielles Datenmuster ausgebbar sind.

"Dreidimensional organisiert" bedeutet dabei, daß jedes Speicherelement durch eine aus drei Teilen bestehende Adresse gekennzeichnet ist, wobei jeder dieser Teile getrennt ansprechbar ist. Man kann diese drei Teile als "Koordinaten" x,y,z deuten und dadurch die Vorgänge im Datenspeicher anschaulich darstellen. Mit der tatsächlichen räumlichen Anordnung der Speicherelemente hat das in der Regel nichts zu tun. Eine "Bitebene" ist dementsprechend die Gesamtheit aller Speicherelemente, in denen gleichartige Bits, z.B. die geringstwertigen Bits, aller Datenwörter gespeichert sind.

Zweckmäßigerweise ist zur Adressierung des Zwischenspeichers und zur Steuerung der Datenwege ein Mikroprogramm vorgesehen.

Der Zwischenspeicher kann aus zwei Teilbereichen mit jeweils zugehörigem Schaltnetzwerk aufgebaut sein. Dabei kann jeder der Teilbereiche sowohl für die Wandlung des bitparallel und wortseriell formatierten Datenstromes in ein wortparallel und bitserielles Datenmuster als auch für die Wandlung eines wortparallel bitseriell organisierten Datenstromes in ein bitparallel und wortserielles Datenmuster eingerichtet sein. Es ist dann möglich, Daten im bitparallelen, wortseriellen Datenformat in einen ersten Teilbereich einzugeben und gleichzeitig aus dem anderen Teilbereich Daten im wortparallelen, bitseriellen Datenformat an den Parallelrechner abzugeben.

Vorteilhafterweise sind für die beiden Teilbereiche unabhängig voneinander ablaufende Mikroprogramme vorgesehen. Die beiden Mikroprogramme können zum Arbeiten mit unterschiedlichen Daten- und Taktraten eingerichtet sein. Dadurch ist es möglich, mit einem Teilbereich Daten mit einer ersten Datenrate im bitparallelen, wortseriellen Datenformat zu empfangen und gleichzeitig mit dem anderen Teilbereich bereits umformatierte Daten mit einer zweiten Datenrate an den Parallelrechner zu übergeben. Ebenso können bei der Datenentsorgung durch einen Teilbereich Daten im wortparallelen, bitseriellen Format mit der zweiten Datenrate aus dem Parallelrechner übernommen und gewandelt werden, während gleichzeitig mit dem anderen Teilbereich umformatierte Daten bitparallel und wortseriell mit einer dritten Datenrate abgegeben werden.

Ein Ausführungsbeispiel der Erfindung ist nachstehend unter Bezugnahme auf die zugehörigen Zeichnungen näher erläutert.

Fig.1    veranschaulicht die Grobstruktur eines einzelnen Prozessorelements bei einem Parallelrechner.

Fig.2 veranschaulicht die Datenschichten in den lokalen Direktzugriffspeichern (RAMs) eines als Array von Prozessorelementen aufgebauten Parallelrechners.

Fig.3 veranschaulicht die Datenstrukturen in einem Array von Prozessorelementen bei Eingabe- und Ausgabeoperationen.

Fig.4 veranschaulicht die Strukturwandlung der Eingangsdaten bei einer Datenschnittstelle von wortseriell, bitseriell ankommenden Daten in "flächige", wortparallele, bitserielle Daten.

Fig.5 veranschaulicht die prinzipielle Wirkungsweise der Datenschnittstelle bei Datenausgabe-Operationen.

Fig.6 zeigt die Anordnung der Prozessorelemente in einem als binärer Array-Prozessor ausgebildeten Parallelrechner.

Fig.7 veranschaulicht in einer perspektivischen Darstelung das Verbindungsschema der Prozessorelemente untereinander über Bausteingrenzen hinweg.

Fig.8 veranschaulicht in einer perspektivischen Darstellung das Verbindungsschema von Kommunikations-Registern des Parallelrechners.

Fig.9 ist eine schematisch-perspektivische Darstellung und veranschaulicht die Struktur der Datenschnittstelle bei der Eingabe von Echtzeitdaten.

Fig.10 ist eine schematisch-perspektivische Darstellung und veranschaulicht die Struktur der Datenschnittstelle bei der Übertragung der Daten auf ein Array von Prozessorelementen.

Fig.11 ist eine schematisch-perspektivische Darstellung und veranschaulicht die Struktur der Datenschnittstelle bei der Übertragung von 16 Bit-Daten von einem Array von Prozessorelementen auf die Datenschnittstelle.

Fig.12 ist eine schematisch-perspektivische Darstellung und veranschaulicht die Struktur der Datenschnittstelle bei der Ausgabe von 16 Bit-Daten aus der Datenschnittstelle.

Fig.13 zeigt die Grundstruktur der ROM-Steuerung der Datenschnittstelle.

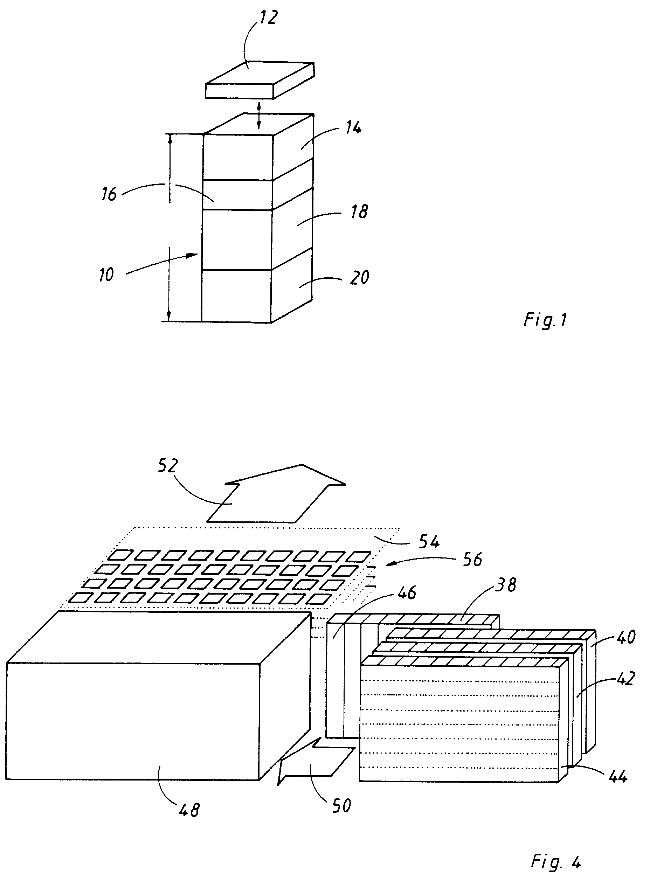

Fig.1 zeigt die Grobstruktur eines einzelnen Prozessorelements bei einem Parallelrechner.

Das Prozessorelement 10 enthält einen Prozessorteil 12. Der Prozessorteil 12 ist ein 1 Bit-Prozessor. Der Prozessorteil 12 ist für die bitserielle Verarbeitung beliebiger Operandenlängen augelegt. Der Prozessorteil 12 enthält in bekannter und daher nicht im einzelnen dargestellter Weise eine Arithmetik-Logik-Einheit (ALU), Register, Kommunikations-Register und Kommunikations-Datenpfade. "Darunter" befinden sich lokale Direktzugriffspeicher 14 für insgesamt 256 Bit. Zu verarbeitende Daten liegen bitweise vertikal gestaffelt als Schichten 16, 18, 20 in dem lokalen Direktzugriffspeicher 14.

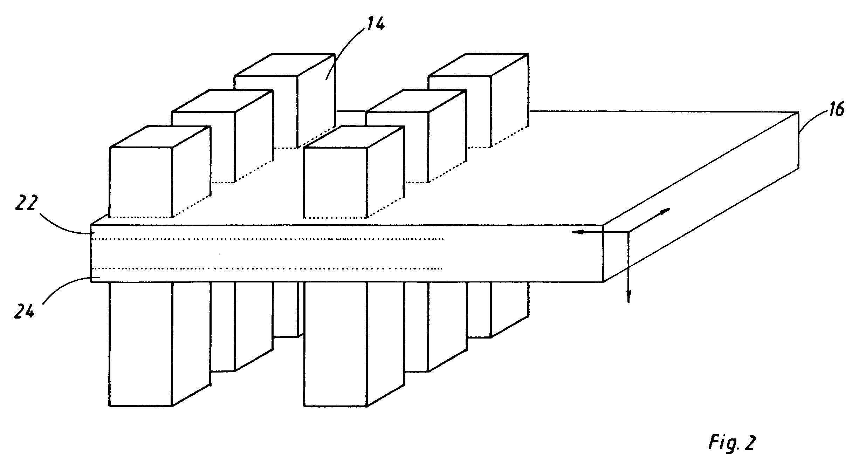

In einem größeren Verbund (Fig.2) in einem sogenannten Array von Prozessorelementen bilden die Datenschichten 16, 18, 20 zweidimensionale Strukturen mit Bitebenen 22 bis 24. Jede Datenschicht, z.B. 16 hat eine "Schichtdicke", die durch die Anzahl der vertikal gestaffelten Speicherelemente in jedem Direktzugriffspeicher 14 bestimmt ist.

Die vertikale Position eines gespeicherten Bits bestimmt die Wertigkeit des Bits. In der zweidimensionalen Struktur, z.B. 22, der Datenschichten 16 kommen zu dieser vertikalen Position noch Informationen über die "horizontale" Position des Bits in der Datenschicht 16 hinzu.

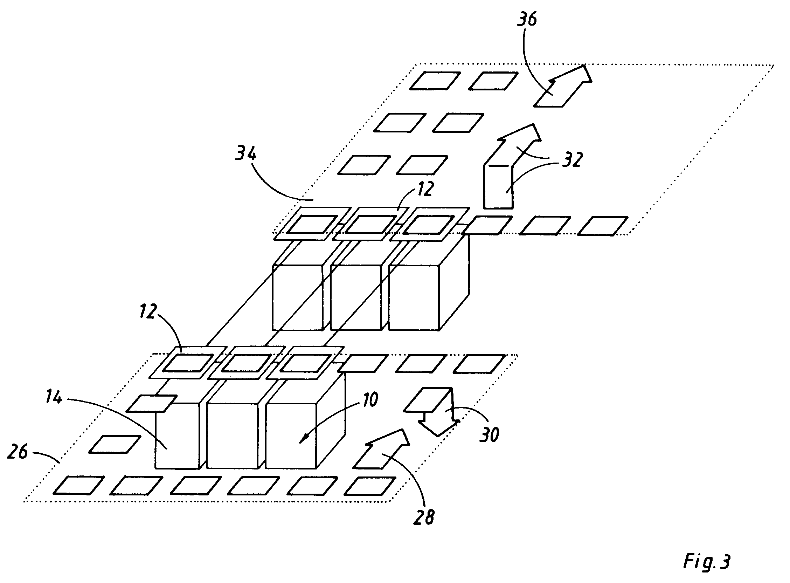

Die Datenversorgung und Datenentsorgung dieser lokalen Direktzugriffspeicher 14 erfolgt durch Transfer von "Bitebenen". Das ist in Fig.3 angedeutet. Die Prozessorelemente verfügen für die Übernahme und den Transport von Bitebenen über einen speziellen Kommunikationsweg. Dieser Kommunikationsweg kann unabhängig von laufenden Rechenoperationen belegt werden.

Bei der Dateneingabe werden die Daten einer Bitebene 26 zunächst "horizontal", parallel zur Ebene des Arrays von Prozessorelementen, in das Kommunikations-Register des Arrays geladen, das aus den Kommunikations-Registern in den Prozessorteilen 12 der einzelnen Prozessorelemente 10 aufgebaut ist. Das ist im vorderen Teil von Fig.3 durch den Pfeil 28 angedeutet. Wenn die Bitebene 26 positionsgenau zu den Prozessorelementen 10 ausgerichtet ist, werden die Bits dann in die entsprechenden Speicherzellen der lokalen Direktzugriffspeicher 14 "abgesenkt". Das ist in Fig.3 durch den nach unten abgeknickten Pfeil 30 angedeutet. Die Datenschicht 16 wird dadurch aufgebaut, daß nacheinander die verschiedenen Bitebenen dieser Schicht schrittweise "horizontal" in das Kommunikations-Register transportiert und dann wieder schrittweise in die Direktzugriffspeicher 14 der Prozessorelemente 10 abgesenkt werden.

Bei der Ausgabe der Daten wird umgekehrt verfahren: Die Daten sind in den "Schichten 16, 18, 20 in den lokalen Direktzugriffspeichern 14 der Prozessorelemente 10 gespeichert. Diese Daten werden dann Bitebene für Bitebene "angehoben" und in das Kommunikations-Register der Prozessorteile 12 geladen. Das ist in Fig.3 durch Pfeil 32 angedeutet. Die "angehobene" Bitebene 34, z.B.

die Bitebene mit den geringstwertigen Bits der verschiedenen Daten, wird dann schrittweise "horizontal herausgeschoben" und so ausgegeben. Das ist in Fig.3 durch Pfeil 36 angedeutet.

Ein Parallelrechner der beschriebenen Art ist besonders geeignet für die Verarbeitung von zweidimensionalen Datenstrukturen. Solche Datenstrukturen sind beispielsweise Bilddaten. Sensoren liefern für jedes Bildelement (Pixel) einen Helligkeitswert. Die Sensoren werden zeilenweise ausgelesen. Es ergibt sich eine Folge von Helligkeitswerten. Diese Helligkeitswerte werden digitalisiert. Die nacheinander erscheinenden digitalen Helligkeitswerte bilden einen Datenstrom. In den Daten dieses Datenstromes stehen alle Bits der digitalen Helligkeitswerte gleichzeitig zur Verfügung. Die Heiligkeitswerte erscheinen "bitparallel". Die Helligkeitswerte der verschiedenen Bildelemente erscheinen bei einer zeilenweisen Abtastung jedoch zeitlich nacheinander. Die Helligkeitswerte erscheinen daher "wortseriell". Es gilt, die bitparallel und wortseriell ankommenden Daten so umzuformatieren, daß sie in der beschriebenen Weise in den Parallelrechner eingegeben werden können.

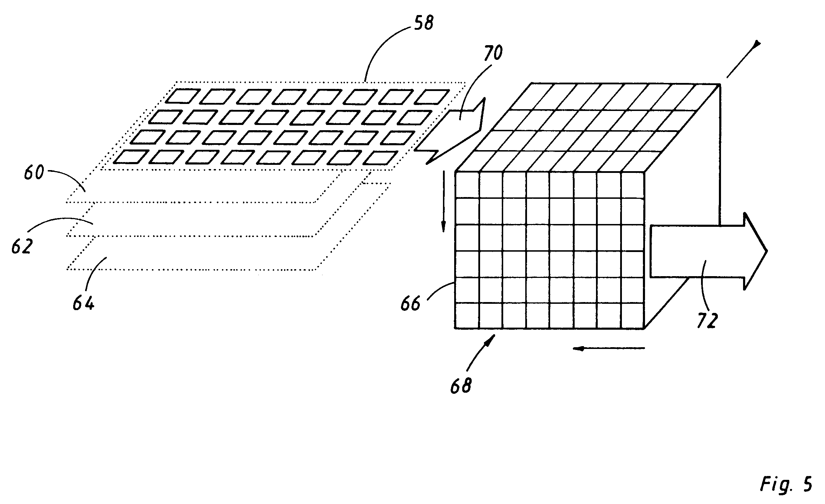

Das ist schematisch in Fig.4 dargestellt. Die Daten erscheinen seriell in Zeilen 38, 40, 42, 44. Jedes Wort besteht aus einer Binärzahl mit Bits verschiedener Wertigkeit. Das ist in Fig.4 durch die vertikale Dimension dargestellt. Jedes Wort ist so durch eine Säule 46 repräsentiert. Die Bits jedes Worts 46 stehen gleichzeitig, parallel zur Verfügung.

Zur Eingabe der Daten in den Parallelrechner ist dem Parallelrechner eine Datenschnittstelle 48 vorgeschaltet. Diese Datenschnittstelle 48 enthält einen dreidimensional organisierten Speicher. "Dreidimensional organisiert" bedeutet dabei, daß die Adresse jedes Speicherelementes drei einzeln ansprechbare Bestandteile hat, die drei "Dimensionen" entsprechen. Eine dieser Dimensionen ist die Wertigkeit des jeweiligen Bits. Eine andere Dimension kann beispielsweise die Zeile 38, 40, 42 oder 44 angeben, eine weitere Dimension entspricht der Position des Worts in der betreffenden Zeile. Das kann durch eine dreidimensionale Darstellung wie in Fig.4 anschaulich gemacht werden. In die Datenschnittstelle mit dem dreidimensional organisierten Speicher werden die Daten 46 seriell Zeile für Zeile eingegeben. Das ist durch einen Pfeil 50 in Fig.4 dargestellt. Danach werden die so gespeicherten Daten Bitebene für Bitebene "waagerecht" herausgeschoben und in den Parallelrechner in der beschriebenen Weise eingegeben. Das ist in Fig.4 durch Pfeil 52 dargestellt. Mit 54 ist in Fig.4 die Bitebene mit den geringstwertigen Bits bezeichnet. "Darunter" liegen die Bitebenen 56 mit den höherwertigen Bits.

Die Ergebnisse der Berechnungen liegen bei dem Parallelrechner in Form von Datenschichten in den lokalen Direktzugriffspeichern 14 der Prozessorelemente 10 vor. Ähnlich wie bei der Eingabeoperation erfolgt die Ausgabe dieser Daten sequentiell, indem nacheinander die einzelnen Bitebenen in die Datenschnittstelle übertragen werden. Das ist in Fig.5 schematisch dargestellt. Dabei ist angenommen, daß die Ergebnisse in 16 Bitebenen vorliegen. Die Operandenlänge ist also 16 Bit.

Die Bitebenen 58, 60, 62, 64 usw. werden aus den Direktzugriffspeichern 14 nacheinander in die Kommunikations-Register "angehoben" und "waagerecht" in einen dreidimensional organisierten Speicher 66 einer Datenschnittstelle 68 übertragen. Das ist durch Pfeil 70 in Fig.5 dargestellt. Nachdem alle Bittebenen 58, 60, 62, 64 usw. aus den Direktzugriffspeichern 14 der Prozessorelemente 10 in den Speicher 66 übertragen worden sind, werden die Daten dann bitparallel und wortseriell ausgegeben. Das ist in Fig.5 durch Pfeil 72 dargestellt.

Der dreidimensional organisierte Speicher 66 enthält als erste "Dimension", d.h. Adressenbestandteil, x die Wertigkeit des Bits, als zweite Dimension y die Position des Worts in der Zeile und als dritte Dimension z die Nummer der Zeile.

Zum Übertragen einer Bitebene wird die x-Adresse, welche die Bitebene 58, 60, 62 oder 64 des Speichers 66 festgehalten. Die y-Adresse wird auf "0" gestellt, entsprechend der ersten "vertikalen" Schicht des Speichers 66. In "z-Richtung" werden so viele Speicherelemente wie Bitsignale in dieser "z-Richtung" am Parallelrechner anstehen zum Schreiben freigegeben. Die Bits der ersten Spalte der Bitebene 58 des Parallelrechners werden dann parallel auf die "rechte obere" Spalte des Speichers 66 übertragen. Es werden somit in Fig.5 zunächst aus der Bitebene 58 die Inhalte der Speicherelemente 0, 8, 16, 24 auf die entsprechenden Speicherelemente des Speichers 66 übertragen. Es wird dann die y-Adresse schrittweise auf 1, 2, 3 usw. erhöht und jedesmal die Inhalte der Speicherelemente einer Spalte auf die entsprechenden Speicherelemente, z.B. 1, 9, 17, 25, des Speichers 66 übertragen, bis der gesamte Inhalt der Bitebene 58 auf die oberste Ebene des Speichers 66 übertragen ist.

Wenn die Bitebene 58 vollständig in den Speicher 66 übertragen ist, wird die Bitebene 60 im Parallelrechner in das Kommunikations-Register angehoben. Gleichzeitig wird die x-Adresse um eins erhöht. Die y-Adresse wird auf null zurückgestellt. In der beschriebenen Weise werden nun die Inhalte der zweiten Bitebene 60 des Parallelrechners auf die zweitoberste Ebene des Speichers 66 übertragen. Durch Inkrementierung der x-Adresse und "Anheben" der Bitebenen 62, 64 usw. in das Kommunikations-Register des Parallelrechners werden nacheinander alle sechzehn Bitebenen des Parallelrechners, in denen die Ergebnisse der Rechenoperationen gespeichert sind, in den Speicher 66 übertragen. Die Daten sind dann durch die "vertikal" angeordneten Bits wieder jeweils vollständig im Speicher 66 gespeichert.

Aus dem Speicher 66 werden die Daten dann bitparallel und wortseriell ausgelesen. Zu diesem Zweck wird zunächst die z-Adresse auf den Anfangswert gestellt. Es werden parallel alle sechzehn x-Adressen zum Auslesen aktiviert. Dann werden die y-Adressen inkremental erhöht. Auf diese Weise wird zunächst die in Fig.5 "vorderste, vertikale" Schicht des Speichers von "rechts nach links" ausgelesen, wie das durch den Pfeil 72 angedeutet ist. Danach wird die z-Adresse um eins erhöht und die nächste Schicht ausgegeben. Es entsteht so ein Datenfluß von bitparallel, wortseriell auftretenden 16 Bit-Daten. Diese Daten werden an eine weitere Verarbeitungsstufe übergeben.

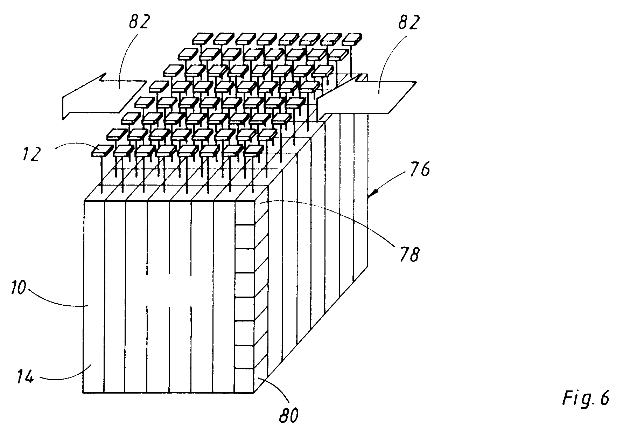

Nachstehend wird eine technische Realisierung des vorstehend erläuterten Prinzips unter Bezugnahme auf die Figuren 6 bis 13 im einzelnen beschrieben.

Fig.6 zeigt einen Parallelrechner 76, wie er in Verbindung mit der Datenschnittstelle 68 verwendet wird.

Der Parallelrechner 76 enthält vierundsechzig einzelne Prozessorelemente 10 der in Fig.1 dargestellten Art. Die Prozessorelemente 10 sind in einer quadratischen Matrix angeordnet, so daß der Parallelrechner acht Zeilen von jeweils acht Prozessorelementen 10 enthält. Wie schon in Verbindung mit Fig.1 beschrieben wurde, enthält jedes Prozessorelement 10 einen Prozessorteil 12 und einen lokalen Direktzugriffsspeicher (RAM) 14. In Fig.6 hat jeder Direktzugriffsspeicher zweihundertsechsundfünfzig Speicherelemente, die hier "übereinander" vom Speicherelement 78 des höchstwertigen Bit zum Speicherelement 80 des geringstwertigen Bit dargestellt sind. Die Prozessorteile 12 enthalten neben den eigentlichen Prozessorbauteilen ein Kommunikations-Register. Das Kommunikations-Register jedes Prozessorelements 10 kann Daten in einer Richtung von "Ost" nach "West" jeweils bis zum benachbarten Prozessorelement übertragen. Diese Übertragung ist auch über die Grenzen des als Baustein ausgebildeten Parallelrechners 76 hinweg möglich. Es können daher mehrere solcher Parallelrechner kombiniert werden. Jedes Kommunikations-Register kann direkt bitweise Daten in den zugehörigen lokalen Direktzugriffsspeicher einschreiben und aus diesem auslesen. Die Gesamtheit der Kommunikations-Register bildet eine "Transportschicht". Auf der Transportschicht können unabhängig von laufenden arithmetischen Operationen Daten in Ost-West-Richtung transportiert werden. Diese "Transportschicht" ist in Fig.6 durch Pfeile 82 dargestellt.

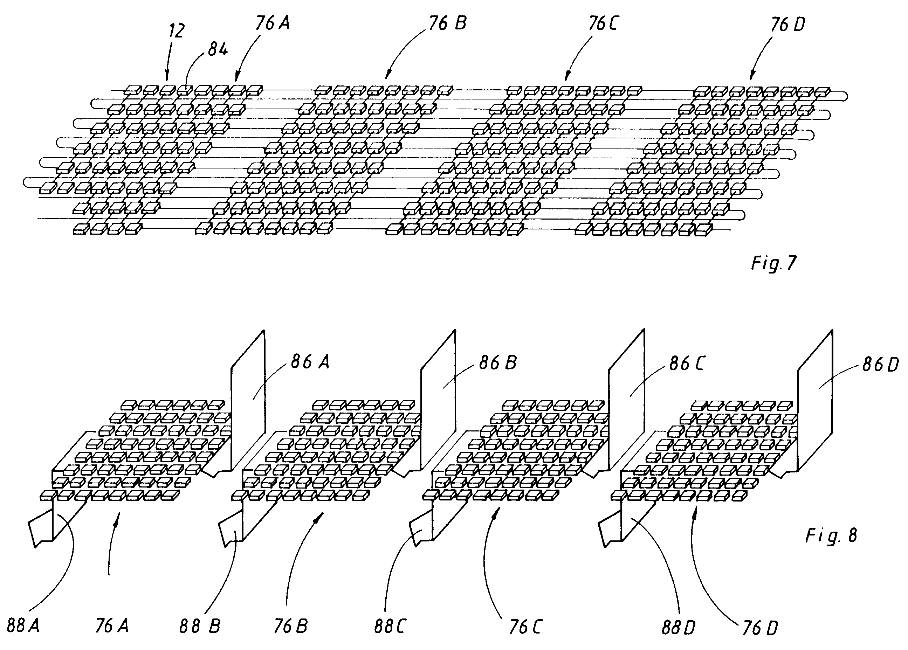

In Fig.7 sind vier Parallelrechner der in Fig.6 dargestellten Art zusammengeschaltet. Die vier Parallelrechner sind in Fig.7 mit 76A, 76B, 76C und 76D bezeichnet. Die Prozessorelemente 10 sind in Fig.7 jeweils durch die zugehörigen Kommunikations-Register 84 symbolisiert. Die Kommunikations-Register 84 bilden in ihrer Gesamtheit die Transportschicht.

Die eigentlichen Prozessorteile 12 sind über bidirektionale Ost-West-Verbindungen über die Ränder der einzelnen Parallelrechner 76A, 76B, 76C und 76 D hinaus miteinander verbunden. Diese Verbindung folgt einem mäanderförmig hin- und hergehenden Pfad, so daß sich eine durchgehende, mäanderförmige Kette von Prozessorteilen ergibt. Diese Verbindungen sind nicht die Verbindungen zwischen den Kommunikations-Registern sondern die Signalwege zwischen den Rechenregistern der einzelnen Prozessorteile 12. Durch diese mäanderförmige Verbindung ergibt sich für den gesamten Flächenrechner eine quasilineare Struktur aus zweihundertsechsundfünfzig Prozessorelementen. Darin hat jedes Prozessorelement eine feste Positionsnummer.

Die Kommunikations-Register 84 sind nur innerhalb jedes einzelnen Parallelrechner-Bausteins 76A, 76B, 76C und 76 D in Ost-West-Richtung unidirektional miteinander verbunden. Eine Verbindung zwischen den einzelnen Parallelrechner-Bausteinen besteht für die Datenpfade der Kommunikations-Register 84 nicht.

Für die Einspeisung von Daten in den Rechner existieren vier Eingabepunkte 86A, 86B, 86C und 86D mit einer Breite von je acht Bit. Das gleiche gilt für die Ausgabe von Daten. Auch hier gibt es vier Ausgabestellen 88A, 88B, 88C und 88D mit einer Breite von je acht Bit (Fig.8). Daten, die in das Array von Prozessorelementen eingegeben werden, werden über den "Ostrand" zugeführt. Daten, die von dem Array ausgegeben werden, verlassen die Transportschicht über den "Westrand". Die aus den Kommunikations-Registern bestehende Transportschicht kann aus den Direktzugriffsspeichern 14 der verschiedenen Prozessorelemente 10 in nur einem Arbeitszyklus geladen werden. Um jedoch die vierundsechzig Bit der Transportschicht eines Parallelrechner-Bausteins über den Westrand auszugeben, werden acht Schiebezyklen benötigt. In gleicher Weise werden acht Schiebezyklen benötigt, um alle vierundsechzig Speicherelemente der Transportschicht eines Parallelrechner-Bausteins über den Ostrand mit Datenbits zu laden, d.h. eine Bitebene in der Transportschicht aufzubauen. Das "Absenken" dieser Bitebene in die lokalen Direktzugriffsspeicher 14 erfolgt wiederum parallel für alle vierundsechzig Prozessorelemente und erfordert daher nur einen Arbeitszyklus.

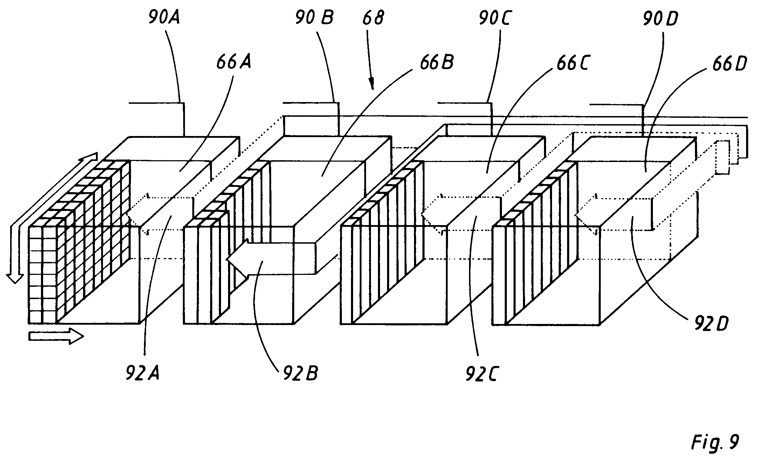

Die Aufgabe der Datenschnittstelle besteht nun darin, zweihundertsechsundfünfzig Datenworte von je acht Bit, die wortseriell und bitparallel einlaufen, so in den Speichern der Datenschnittstelle abzulegen, daß die Daten möglichst effizient Bitebene für Bitebene über die Kommunikations-Register 84 in die Direktzugriffspeicher 14 der Prozessorelemente 10 übertragen werden. Das ist prinzipiell in Fig.9 dargestellt.

Die Datenschnittstelle, die generell mit 68 bezeichnet ist, enthält vier Speicherblöcke 66A, 66B, 66C und 66D. Jeder der Speicherblöcke hat eine Speicherkapazität von 8X32 Bytes. Das Eingeben von Daten erfolgt bitparallel für jeweils acht Bit. Jeder Speicherblock 66A, 66B, 66C und 66D besitzt eine eigene Schreibfreigabe-Leitung 90A, 90B, 90C bzw. 90D. Für das Eingeben der Daten in die Speicherblöcke 66A, 66B, 66C und 66D sind acht Adressenbits erforderlich: Fünf Adressenbits adressieren die Speicherblöcke 66A, 66B, 66C bzw. 66D in "z-Richtung" mit den Speicherzellen "0" bis "31, drei Adressenbit werden für die Adressierung in der "x-Richtung" mit den Schichten "0" bis "7" benötigt. Eine Adressierung in der "y-Richtung" entfällt, da die Daten mit acht Bit parallel eingeschrieben werden. Die vier Dateneingäng 92A, 92B, 92C und 92D von jeweils acht Bit sind für diese Operation durch ein externes Steuersignal parallelgeschaltet. Durch ein Steuersignal an einem der Schreibfreigabe-Leitungen 90A, 90B, 90C oder 90D wird jeweils einer der Speicherblöcke 66A, 66B, 66C bzw. 66D ausgewählt.

Vor Beginn der Datenübernahme wird die x-Adresse auf die erste "vertikale" Schicht gestellt. Es wird x = 0 gesetzt. In z-Richtung wird die erste Spalte adressiert, also z = 0 gesetzt. Zur Datenübernahme wird die Schreibfreigabe-Leitung 90A des ersten Speicherblocks 66A aktiviert. Das erste Wort von acht Bit wird dann in der Speicherzelle mit der Adresse x = 0, z = 0 gespeichert. Dann wird die z-Adresse schrittweise jeweils um eins erhöht, wobei nacheinander die darauffolgenden sieben Daten in der ersten "linken" Schicht des Speicherblocks 66A abgespeichert werden bis zu der Adresse z = 7. Dann werden wieder die x-Adresse und die z-Adresse auf "0" zurückgesetzt und statt der Schreibfreigabe-Leitung 90A des ersten Speicherblocks 66A die Schreibfreigabe-Leitung 90B des zweiten Speicherblocks 66B aktiviert. Es erfolgt jetzt eine Speicherung der nächsten acht Daten in der ersten "linken" Schicht des Speicherblocks 66B. In gleicher Weise werden aufeinanderfolgend die ersten Schichten des zweiten und des dritten Speicherblocks 66C bzw. 66D mit je acht Daten bis zu dem Wort Nr. 31 aufgefüllt. Danach wird die x-Adresse um eins erhöht. Die Schreibfreigabe-Leitung 90A wird wieder aktiviert. Mit den z-Adressen von "0" bis "7" werden beginnend mit Wort Nr.32 die nächsten acht ankommenden Daten in der zweiten Schicht des ersten Speicherblocks 66A gespeichert. Dann wird durch Ansteuern der Schreibfreigabe-Leitung 90B auf den zweiten Speicherblock 66B der Datenschnittstelle 68 umgeschaltet usw. In der Darstellung von Fig.9 wird gerade das Wort Nr. 41 in den Speicherblock 90B eingeschrieben. Der beschriebene Ablauf wiederholt sich, bis alle Speicherblöcke 66A, 66B, 66C und 66D in x-Richtung mit acht "vertikalstehenden" Datenschichten gefüllt sind. Das ist dann der Fall, wenn das Wort Nr.255 in Speicherblock 66D in der Speicherzelle mit der X-Adresse "7" und der z-Adresse "7" eingetragen wurde. In den vier Speicherblöcken stehen dann vier Datenblöcke im Format von 8x8 Bytes. Diese Datenblöcke sind zudem so angeordnet, daß sie der "quasi-linearen" Anordnung der Prozessorelemente 10 von Fig.7 unmittelbar entsprechen.

Damit ist die Schreiboperation für das gewählte Format der Sensordaten abgeschlossen.

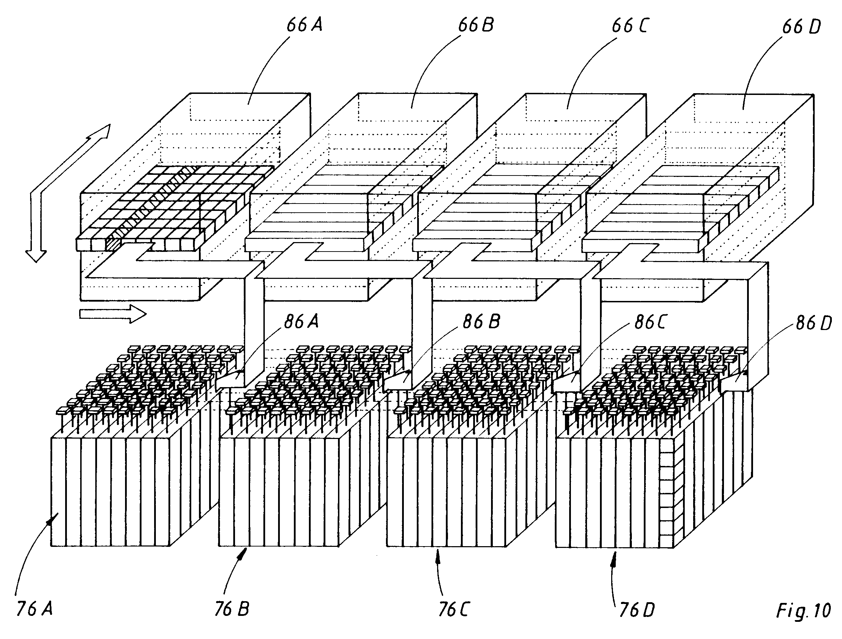

Wie oben schon erwähnt, ist die Datenschnittstelle in zwei unabhängig voneinander zu betreibende Speicherbereiche aufgeteilt. Während einer dieser Speicherbereiche Daten in der vorstehend beschriebenen Weise von außen übernimmt, wird der jeweils andere ausgelesen und überträgt Daten auf den Parallelrechner. Diese Leseoperation gehört ebenfalls zur Dateneingabe. Die zugehörige Struktur zeigt Fig.10.

Im Gegensatz zu der Betriebsart "Schreiben", bei der "vertikal stehende" Datenkolumnen von acht Bit Höhe eingetragen werden, müssen bei der Betriebsart "Lesen" "horizontale" Bitebenen ausgelesen werden. Zu diesem Zweck sind die Ausgänge der vier Speicherblöcke 66A, 66B, 66C und 66D über eine Breite von acht Bit mit den Eingängen der aus den Kommunikations-Registern 84 der Prozessorelemente 10 aufgebauten Transportschicht verbunden. Das ist in Fig. 10 dargestellt.

Zum Auslesen werden die y-Adressen zunächst auf "7" gestellt. Damit wird die Bitebene mit dem geringstwertigen Bit adressiert. In x-Richtung werden alle acht Ausgänge jedes Speicherblocks 66A, 66B, 66C, 66D aktiviert. Die Schreibfreigabe-Leitungen aller Speicherblöcke 66A, 66B, 66C und 66D sind inaktiv. Dadurch wird ein Überschreiben von Daten verhindert. Die z-Adresse wird auf "0" gestellt. An den Eingängen der Transportschicht stehen daher die Daten Nr. 0, 32, 64, 96... für den Parallelrechner-Baustein 76A, bzw. Nr. 8, 40, 72, 104 .. für den Parallelrechner-Baustein 76 B usw. an. Mit jedem Arbeitstakt des Parallelrechners werden nun

- die an den Parallelrechner-Bausteinen 76A, 76B, 76C und 76 D anstehenden Daten über den "Ostrand" der Transportschicht in die diesen Ostrand bildenden Kommunikations-Register 84 übernommen,

- die in der Transportschicht gespeicherten Daten in einer Breite von acht Bit um einen Schritt von Ost nach West weitergeschoben und
- die z-Adressen jeweils um eins erhöht.

Das Auslesen der Datenschnittstelle erfolgt demgemäß bei der Eingabe von Daten mit der Taktrate des Parallelrechners. Dadurch, daß die in die Datenschnittstelle eingeschriebene Datenstruktur im Format von 8x8 Bytes dem geometrischen Format der Parallelrechner-Bausteine 76A, 76B, 76C und 76D entspricht und eine Aufteilung des Speichers der Datenschnittstelle 68 in vier Speicherblöcke 66A, 66B 66C und 66D erfolgt, genügen lediglich acht Arbeitstakte, um die gesamte Information einer Bitebene der Eingangsdaten in die Transportschicht mit den Kommunikations-Registern 84 des Parallelrechners zu laden. Nach acht Arbeitstakten hat die z-Adresse den Zustand "8" erreicht und den Bereich gültiger Eingangsdaten verlassen. In dem nun folgenden Arbeitstakt wird

- die z-Adresse auf "0" zurückgestellt,
- die y-Adresse um eins vermindert und
- die in der Transportschicht stehende Bitebene in den entsprechenden Bereich der Direktzugriffspeicher 14 der Prozessorelemente 10 abgesenkt.

Die Datenausgänge bleiben in x-Richtung in einer Breite von acht Bit aktiviert, so daß nun die nächste Bitebene angewählt ist und in der beschriebenen Weise in die Transportschicht des Parallelrechners überführt werden kann. Dieser Ablauf wiederholt sich acht Mal, bis die y-Adresse den Zustand "0" erreicht hat und in z-Richtung alle gültigen Daten ausgelesen sind. Insgesamt werden für die Übertragung eines Datensatzes vom Format 256x8 Bit

$$N_{GES} = 8 \times (8+1) = 72$$

Arbeitstakte benötigt. Bei einer Arbeitsfrequenz von z.B. 16 MHz ergibt sich für einen Arbeitstakt des Parallelrechners eine Dauer von 62,5 ns. Für die beschriebene Leseoperation werden damit lediglich 4,5 $\mu$s benötigt.

Bei der Ausgabe von Daten aus dem Parallelrechner 76 besteht die Aufgabe, 256 in dem Parallelrechner gespeicherte Ergebnisvariable mit einer Wortlänge von bis zu sechzehn Bit über die von den Kommunikations-Registern 84 gebildete Transportschicht Bitebene für Bitebene zu entladen und als Folge von zweihundertsechsundfünfzig Worten von je sechzehn Bit an eine nachgeschaltete Recheneinheit zu übergeben. Wie bei der Eingabe von Daten besteht diese Operation aus zwei Teiloperationen, einer Schreiboperation und einer Leseoperation. Diese beiden Teiloperationen werden wie bei der schon beschriebenen Eingabe von Daten in den Parallelrechner parallel in zwei Speicherteilen des Speichers 66 der Datenschnittstelle 68 durchgeführt.

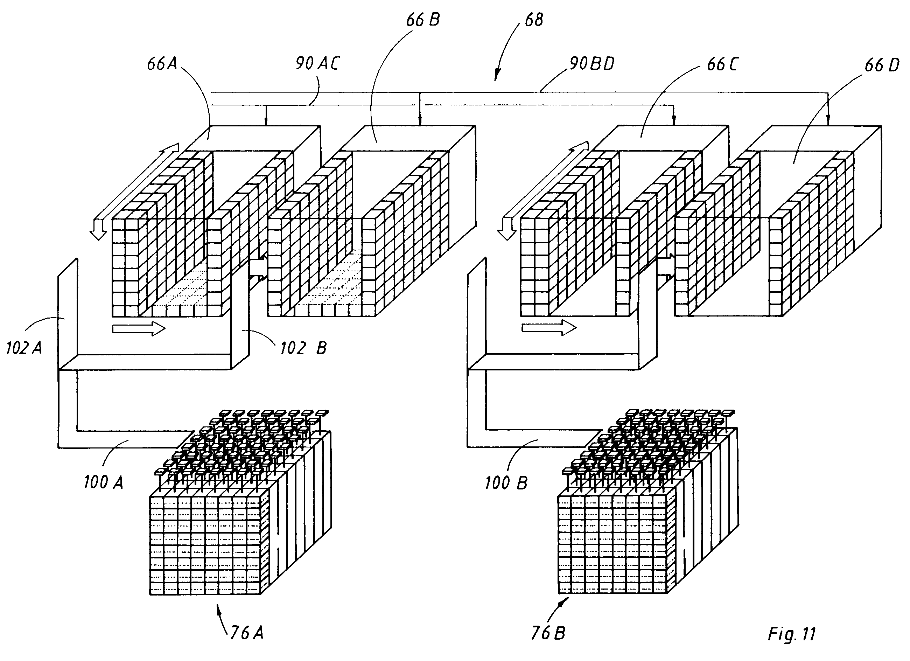

Fig.11 zeigt die Struktur der Datenschnittstelle 68 bei der Schreiboperation, bei welcher Ergebnisvariable aus dem Parallelrechner in den Speicher 66 der Datenschnittstelle 68 eingeschrieben werden.

Da am Ausgang der Datenschnittstelle 68 Daten mit sechzehn Bit bereitgestellt werden müssen, die Datenwege der Speicherblöcke 66A, 66B, 66C und 66D jeweils nur acht Bit breit sind, werden jeweils zwei Speicherblöcke 66A und 66B bzw. 66C und 66D für die Übernahme der Ausgangsdaten zusammengeschaltet. Das ist in Fig.11 für die Parallelrechner-Bausteine 76A und 76 B dargestellt. Die Speicherblöcke 66A und 66B übernehmen die Ausgangsdaten von dem Parallelrechner-Baustein 76A. Die Speicherblöcke 66C und 66D übernehmen die Ausgangsdaten von dem Parallelrechner-Baustein 76B. Für die Übernahme der Ausgangsdaten der Parallelrechner-Bausteine 76C und 76D muß eine weitere Datenschnittstelle der beschriebenen Art vorgesehen werden. Das ist in Fig.11 nicht dargestellt. Dementsprechend ist der Ausgang 100A des Parallelrechner-Bausteins 76A parallel mit den Eingängen 102A und 102B der Speicherblöcke 66A und 66B verbunden. Der Ausgang 100B des Parallelrechner-Bausteins 76B ist parallel mit den Eingängen 102C und 102D der Speicherblöcke 66C und 66D verbunden.

Das Auslesen von Ergebnisdaten aus dem Parallelrechner 76 und das Einschreiben dieser Daten in die Datenschnittstelle 68 beginnt damit, daß eine Bitebene der Ergebnisvariablen, z.B. die Ebene der geringstwertigen Bits, in die aus den Kommunikations-Registern 84 aufgebaute Transportschicht geladen wird. Zugleich werden die x-Adresse und die y-Adresse auf "0" gestellt. Die Schreibfreigabe-Signale der Speicherblöcke 66A und 66C werden über die Schreibfreigabe-Leitung 90AC aufgeschaltet. An einem Ausgang 100A des Parallelrechner-Bausteins 76A stehen dabei z.B. die geringstwertigen Bits der Daten Nr. 0, 32, 64, 96 ... an.

Bei den folgenden Operationen wird die Datenschnittstelle mit dem Arbeitstakt des Parallelrechners 76 gesteuert.

Mit jedem Arbeitstakt des Parallelrechners geschieht nun folgendes:

- Die an den Ausgängen 100A und 100B anstehenden Daten werden mit jeweils acht Bit parallel in "vertikale" Speicherzellen der Speicherblöcke 66A und 66C mit schrittweise veränderten z-Adressen zunächst mit der x-Adresse "0" eingeschrieben.
- In der Transportschicht erfolgt ein Transport der Bitebene jeweils um einen Schritt von Ost nach West, so daß z.B. nach dem ersten Arbeitstakt die geringstwertigen Bits der Ergebnisvariablen Nr. 1, 33, 65, 97 .. an dem Rand der Transportschicht am Ausgang 100A anstehen.

- Nach acht Schritten der z-Adresse ist die Bitebene der geringstwertigen Bits aus den Parallelrechner-Bausteinen 76A und 76 B im Format 8x8 in die jeweils linke "vertikale" Schicht von Speicherelementen der Speicherblöcke 66A bzw. 66C übertragen.
- Danach wird die nächste Bitebene in die Transportschicht der Parallelrechner-Bausteine 76A und 76B "angehoben".
- Gleichzeitig wird die x-Adresse nach jeweils acht Schritten der z-Adresse in Schritten verändert, wobei vor jedem Schritt die z-Adresse auf "0" zurückgestellt wird und nach jedem Schritt der x-Adresse bei festgehaltener y-Adresse die z-Adresse wieder schrittweise verändert wird.
- Dieser Vorgang wird wiederholt bis acht Bitebenen der Parallelrechner-Bausteine 76A und 76B als "vertikale" Schichten in den Speicherblöcken 66A bzw. 66C gespeichert sind.

Zur Übertragung der nächsten acht Bitebenen der Ergebnisvariablen in den Parallelrechner-Bausteinen 76A und 76B wird das Schreibfreigabe-Signal von der Schreibfreigabe-Leitung 90AC abgeschaltet und dafür ein Schreibfreigabe-Signal über eine Schreibfreigabe-Leitung 90BD auf die Speicherblöcke 66B und 66C aufgeschaltet. Der vorstehend geschilderte Vorgang wiederholt sich dann. Dabei werden jetzt die Bitebenen der nächsten acht Bit bis zu dem höchstwertigen Bit in "vertikale, von vorn nach hinten verlaufende" Schichten der Speicherblöcke 66B und 66D übertragen.

In gleicher Weise und gleichzeitig erfolgt die Übertragung der Bitebenen der Ergebnisvariablen aus den Parallelrechner-Bausteinen 76C und 76D auf die in gleicher Weise wie die Speicherbausteine 66A, 66B, 66C und 66D aufgebauten und organisierten (nicht dargestellten) Speicherbausteine der zweiten Datenschnittstelle.

Für die Übertragung einer Variablenschicht von sechzehn Bit "Dicke" aus dem Parallelrechner sind somit

$$N_{GES} = 16 \times (8 + 1) = 144$$

Arbeitstakte des Parallelrechners 76 benötigt. Bei einer Taktfrequenz von 16 MHz und dementsprechend einer Taktperiode von 62,5 ns ergibt sich eine Zeit von 9μs für die Übertragung der gesamten Schicht von Ergebnisvariablen auf die Speicherblöcke.

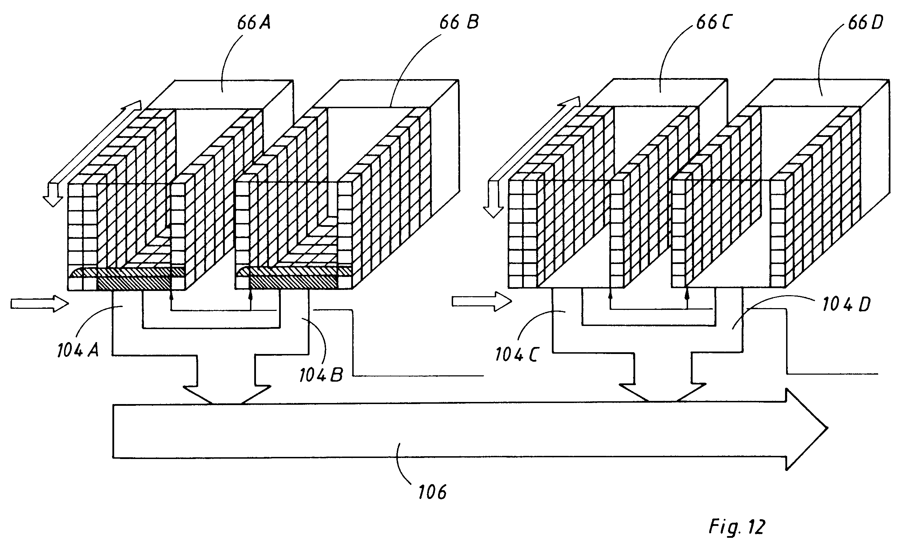

Ähnlich wie bei der Eingabe von Daten in den Parallelrechner ist das Einschreiben der Daten in die Datenschnittstelle nur eine Teilaufgabe. Die Daten müssen aus der Datenschnittstelle ausgelesen und als Datenstrom von wortseriell und bitparallel auftretenden Datenworten von sechzehn Bit für die Weiterverarbeitung ausgegeben werden. Die Datenschnittstelle enthält daher zwei Speicher. Auf einen Speicher werden in der im Zusammenhang mit Fig.11 beschriebenen Weise die Ergebnisvariablen aus dem Parallelrechner 76 Bitebene für Bitebene übertragen. Der jeweils andere Speicher gibt inzwischen die gespeicherten Daten als Datenstrom von Ergebnisvariablen mit sechzehn Bit bitparallel und wortseriell ab. Fig.12 veranschaulicht die Ausgabe der Ergebnisvariablen aus der Datenschnittstelle.

Bei der Ausgabe der Ergebnisvariablen aus den Speicherblöcken 66A, 66B, 66C und 66D sind die Schreibfreigabe-Leitungen aller Speicherblöcke inaktiv. Dadurch wird ein versehentliches Überschreiben bereits gespeicherter Daten verhindert. Die Speicherblöcke 66A, 66B, 66C und 66D haben je einen Ausgang 104A, 104B, 104C bzw. 104D von jeweils acht Bit Breite. An den Ausgängen 104A, 104B, 104C und 104D liegen jeweils acht Speicherelemente mit einer bestimmten y-Adresse und einer bestimmten z-Adresse, und zwar die Speicherelemente mit allen dazugehörigen x-Adressen. Das ist jeweils eine "waagerecht von links nach rechts in Fig.12 verlaufende "Säule". In Fig.12 sind die an den Ausgängen 104A und 104B für die y-Adresse "0" und die z-Adresse "0" schraffiert dargestellt. Die jeweils an den Ausgängen 104A und 104B bitparallel erscheinenden Worte von je acht Bit werden auf einem Bus 106 von sechzehn Bit Breite zu Worten von je sechzehn Bit zusammengesetzt. Entsprechend werden die Worte von je acht Bit Breite an den Ausgängen 104C und 104D auf dem Bus 106 zu Worten von je sechzehn Bit zusammengesetzt.

Die Ausgabe der Ergebnisvariablen aus den Speicherblöcken 66A, 66B, 66C und 66D erfolgt auf folgende Weise:

- Es werden zunächst nur die Ausgänge 104A und 104B der Speicherblöcke 66A und 66B aktiviert.
- Die y-Adresse und die z-Adresse werden auf "0" gesetzt. Alle x-Adressen werden angesprochen.
- Die an den Ausgängen 104A und 104B anstehenden Worte werden zu einem sechzehn Bit Wort auf dem Bus 106 zusammengesetzt.
- Die y-Adresse wird schrittweise erhöht. Die dabei an den Ausgängen 104A und 104B erscheinenden Worte werden ebenfalls auf dem Bus 106 paarweise zu Worten von sechzehn Bit zusammengesetzt.

- Nach acht so gebildeten Worten, wenn die y-Adresse "8" geworden ist, wird die y-Adresse auf "0" zurückgesetzt.
- Die z-Adresse wird um eins erhöht und dann wieder die y-Adresse stufenweise bis "7" erhöht und bei "8" zurückgesetzt.

Dieser Vorgang wird wiederholt, bis alle in den Speicherblöcken 66A und 66B gespeicherten Ergebnisvariablen bitparallel und wortseriell auf dem Bus 106 ausgegeben worden sind. Dann werden die Ausgänge 104C und 104D aktiviert. Die Ergebnisvariablen aus den beiden Speicherblöcken 66C und 66D werden in gleicher Weise ausgegeben.

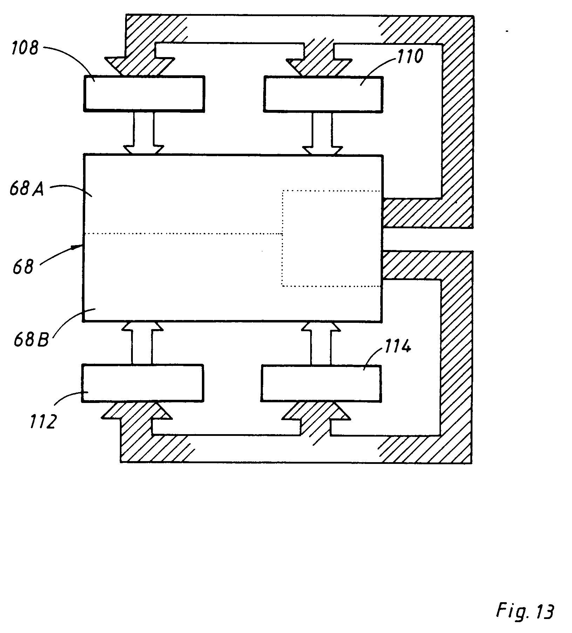

Die Steuerung der Datenschnittstelle erfolgt durch Direktzugriffspeicher (ROMs) 108, 110, 112 und 114 (Fig.13), in denen die Steuerbefehle gespeichert sind. Die Direktzugriffspeicher 108, 110, 112 und 114 werden von einem Zähler mit zwölf Bit gesteuert. Dieser Zähler liefert die Adressen der Steuerbefehle, die in den Direktzugriffspeichern 108, 110, 112 und 114 gespeichert sind. Diese Steuerbefehle sind beispielsweise Steuerbefehle zur Aufschaltung von Schreibfreigabe- Signalen oder zur Freigabe der Datenausgabe sowie zur Steuerung der Datenwege.

Die Datenschnittstelle 68 weist zwei übereinstimmende Teilbereiche 68A und 68B auf. Jeder der Teilbereiche ist von zwei Direktzugriffspeichern 108, 110 bzw. 112,114 steuerbar. Jeder der Teilbereiche 68A und 68B ist in der Lage, sowohl die Datenversorgung als auch die Datenentsorgung eines Parallelrechners in der oben beschriebenen Weise durchzuführen.

Die beiden Teilbereiche können unterschiedlich angesteuert werden, so daß ein Teilbereich, z.B.68A, Daten in einem Format übernimmt und der andere Teilbereich, z:B. 68B, gleichzeitig Daten in einem anderen Format ausgibt. Die beiden Teilbereiche und die zugehörigen Mikroprogramme können dabei mit unterschiedlichen Taktraten arbeiten. Dabei werden Daten mit einer ersten Taktrate $D_1$ z.B. von dem Teilbereich 68A im bitparallelen, wortseriellen Datenformat empfangen und gleichzeitig bereits umformatierte Daten mit einer zweiten Taktrate $D_2$ an den Parallelrechner 76 abgegeben. Gleichzeitig werden bei der Datenentsorgung von dem anderen Teilbereich 68B Daten im wortparallelen, bitseriellen Format mit der Datenrate $D_2$ von dem Parallelrechner 76 übernommen und umformatiert, wobei umformatierte Daten mit einer dritten Datenrate $D_3$ abgegeben wird.

Mit der beschriebenen Struktur können auch andere Datenformate und/oder Anordnungen eines Parallelrechners bedient werden.

Die Speicherblöcke 66A, 66B, 66C, 66D haben jeweils eine Tiefe von zweiunddreißig Speicherzellen. Die Speicherblöcke 66A, 66B, 66C und 66D sind daher nur zu einem Viertel gefüllt. Es können daher bis zu 1 024 Daten in den Speicherblöcken abgelegt werden.

Die Verteilung der 256 eingegebenen Daten auf die vier Speicherblöcke 66A, 66B, 66C und 66D wurde aus Zeitgründen gewählt. Tatsächlich hätte der gesamte Datensatz auch in einem Speicherblock, z.B. Speicherblock 66A abgelegt werden können. Die weiteren Speicherblöcke 66B, 66C, 66D stünden dann für die Übernahme der nachfolgenden Datensätze zur Verfügung. Auch kleinere Datensätze, z.B. kürzere Zeilenformate bei der Bildverarbeitung können mit der beschriebenen Datenschnittstelle verarbeitet werden. Allerdings sollte dann die Form des Arrays von Prozessorelementen 10 des Parallelrechners 76 an dieses andere Zeilenformat angepaßt werden. Anderenfalls würden bei Nachbarschaftsoperationen ungültige Randdaten auftreten.

Auch andere Strukturen eines Parallelrechners können mit der beschriebenen Datenschnittstelle mit Daten versorgt werden.

Es ist beispielsweise möglich, jeweils einem Speicherblock, z.B. 66A, vier in "Ost-West"-Richtung verbundene Parallelrechner-Bausteine zuzuordnen und den Parallelrechner in "Nord-Süd"-Richtung auszudehnen. Die übrigen drei Speicherblöcke 66B, 66C und 66D würden dann drei zusätzliche Zeilen von Parallelrechner-Bausteinen parallel mit Daten versorgen. Es ist auch möglich, jeweils einen Speicherblock zwei Parallelrechner-Bausteinen zuzuordnen. Es können auch zwei Datenschnittstellen in Serie betrieben werden. Die dabei erhaltenen acht Speicherausgänge können dann acht Parallelrechner-Bausteinen zugeordnet werden, die ähnlich wie in Fig.7 in "Ost-West"-Richtung miteinander verbunden sind. Eine solche Anordnung würde bei der Bildverarbeitung eine Zeilenlänge von 512 Bildelementen (Pixeln) zulassen.

**Patentansprüche**

1. Datenschnittstelle zur Wandlung zwischen bitparallel und wortseriell vorliegenden Datenmustern und bitseriell und wortparallel vorliegenden Datenmustern in Verbindung mit einem Parallelrechner

   **dadurch gekennzeichnet, daß**

   (a) dem Parallelrechner ein dreidimensional organisierter Datenspeicher (66) mit einer dreidimensionalen Adressierung vorund/oder nachgeschaltet ist, bei welcher jede Adresse von drei Komponenten gebildet ist, von denen eine erste Komponente (x) die Wertigkeit eines Bits in einem Wort, die zweite Komponente (y) die laufende Zahl des Wortes in einer Folge von Worten und die dritte Komponente (z) die laufende Zahl der Folge angibt, zu der das Wort gehört,

(b) dem Datenspeicher ein Schaltnetzwerk zur Steuerung des Datenspeichers zugeordnet ist,

(c) in dem Datenspeicher

- ein ankommender bitparallel und wortseriell formatierter Datenstrom zwischenspeicherbar ist, wobei die Daten von dem Datenspeicher (66) als bitserielles und wortparalleles Datenmuster in Form von "Bitebenen" (26) mit gleichen Bitadressen auf einen Parallelrechner (76) aufschaltbar sind, und/oder in dem Datenspeicher ein vom Parallelrechner (76) gelieferter, bitseriell und wortparallel als Folge von "Bitebenen" organisierter Datenstrom zwischenspeicherbar ist, wobei die Daten als bitparalleles und wortserielles Datenmuster ausgebbar sind.

2. Datenschnittstelle nach Anspruch 1, **dadurch gekennzeichnet, daß** zur Adressierung des Datenspeichers (66) und zur Steuerung der Datenwege ein Mikroprogramm vorgesehen ist.

3. Datenschnittstelle nach Anspruch 1, **dadurch gekennzeichnet, daß** der Datenspeicher (66) aus zwei Teilbereichen (68A,68B) mit jeweils zugehörigem Schaltnetzwerk aufgebaut ist.

4. Datenschnittstelle nach Anspruch 3, **dadurch gekennzeichnet, daß** jeder der Teilbereiche (68A,68B) sowohl für die Wandlung des bitparallel und wortseriell formatierten Datenstromes in ein wortparallel und bitserielles Datenmuster als auch für die Wandlung eines wortparallel bitseriell formatierten Datenstromes in ein bitparallel und wortserielles Datenmuster eingerichtet ist.

5. Datenschnittstelle nach den Ansprüchen 2 und 4, **dadurch gekennzeichnet, daß** für die beiden Teilbereiche (68A,68B) unabhängig voneinander ablaufende Mikroprogramme (108,110;112,114) vorgesehen sind.

6. Datenschnittstelle nach Anspruch 5, **dadurch gekennzeichnet, daß** die beiden Mikroprogramme zum Arbeiten mit unterschiedlichen Daten- und Taktraten eingerichtet sind.

Fig.1

Fig. 4

Fig. 2

Fig. 3

Fig. 5

EP 0 499 890 A2

Fig. 6

Fig.7

Fig.8

Fig. 9

EP 0 499 890 A2

Fig.10

Fig. 11

EP 0 499 890 A2

Fig. 12

Fig. 13